# EUROPÄISCHE PATENTSCHRIFT

(11) **EP 0 430 879 B1**
(45) Veröffentlichungstag und Bekanntmachung des Hinweises auf die Patenterteilung: **14.12.1994**
(21) Anmeldenummer: 90810894.7
(22) Anmeldetag: 20.11.1990
(51) Int. Cl.: C09B 67/22, D06P 3/06, D06P 1/39, C09B 29/30

(54) **Farbstoffmischungen und deren Verwendung**
Mixtures of dyes and their use
Mélanges de colorants et leur utilisation

(30) Priorität: 28.11.1989 CH 4250/89
(43) Veröffentlichungstag der Anmeldung: 05.06.1991
(73) Patentinhaber: CIBA-GEIGY AG, 4002 Basel (CH)
(72) Erfinder: Mäusezahl, Dieter, Dr., CH-4105 Biel-Benken (CH)

(56) Entgegenhaltungen:
- EP-A- 0 092 512
- EP-A- 0 181 292

## Beschreibung

Die vorliegende Erfindung betrifft Mischungen rotfärbender Farbstoffe, die zum Färben von natürlichen oder synthetischen textilen Polyamidfasermaterialien aus wässrigem Bad geeignet sind, die sehr gute Echtheitseigenschaften aufweisen und die insbesondere in Kombination mit anderen Farbstoffen ein gutes Ziehverhalten, insbesondere aus Kurzflotten, zeigen.

Gegenstand der vorliegenden Erfindung ist eine Farbstoffmischung, die einen Farbstoff der Formel 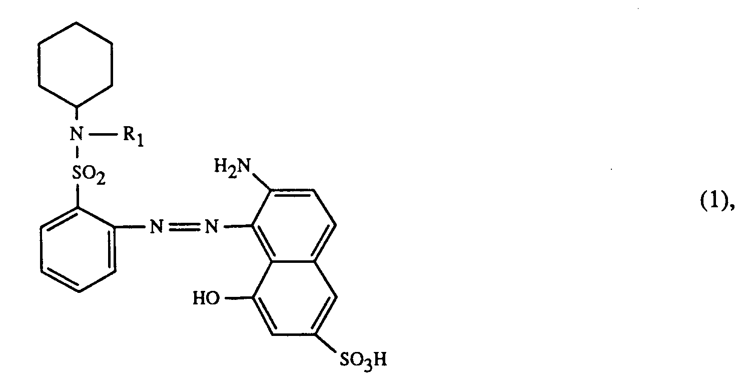
worin R₁ Methyl oder Aethyl ist, und mindestens einen Farbstoff der Formeln (2) und (3) 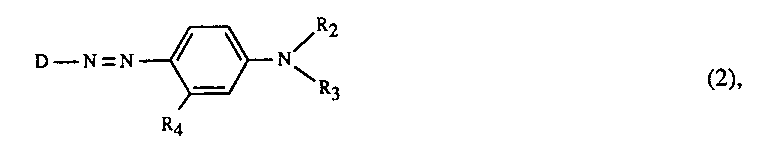
worin D gegebenenfalls substituiertes Phenyl, Thiophenyl oder Benzthiazolyl, R₂ C₁-C₈-Alkyl, R₃ gegebenenfalls substituiertes C₁-C₈-Alkyl und R₄ Wasserstoff oder C₁-C₄-Alkyl ist,
und 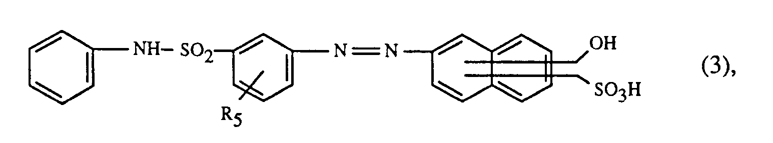
worin R₅ C₁-C₄-Alkyl ist, enthält.

Bevorzugt ist die erfindungsgemässe Farbstoffmischung, die einen Farbstoff der Formel (1) und einen Farbstoff der Formel (2) oder einen Farbstoff der Formel (1) und einen Farbstoff der Formel (3) enthält.

Als C₁-C₈-Alkyl kommen für R₂ und R₃ in der Formel (2) unabhängig voneinander z.B. Methyl, Äthyl, Propyl, Isopropyl, n-Butyl, sek.-Butyl, tert.-Butyl, Isobutyl, Pentyl, Hexyl, Heptyl und Octyl in Betracht. Vorzugsweise sind R₂ und R₃ C₁-C₄-Alkyl.

Der Rest R₃ als C₁-C₈-Alkyl kann substituiert sein, z.B. durch Sulfo, Sulfato oder Phenyl. Als Beispiele seien Benzyl, β-Sulfoäthyl, γ-Sulfopropyl und β-Sulfatoäthyl genannt.

Als C₁-C₄-Alkyl kommen für R₄ in Formel (2) und für R₅ in Formel (3) unabhängig voneinander z. B. Methyl, Äthyl, Propyl, Isopropyl, n-Butyl, sek.-Butyl, tert.-Butyl oder Isobutyl, insbesondere Methyl, in Betracht.

Der Rest D in Formel (2) kann z.B. durch Halogen, wie Fluor, Chlor oder Brom, C₁-C₄-Alkyl, wie Methyl, Äthyl, Propyl, Isopropyl, n-Butyl, sek.-Butyl, tert.-Butyl oder Isobutyl, C₁-C₄-Alkoxy, wie z.B. Methoxy, Äthoxy, Propoxy oder Butoxy, C₁-C₄-Alkoxycarbonyl, wie z.B. Methoxycarbonyl oder Aethoxycarbonyl, Sulfo oder gegebenenfalls im Alkylteil durch Sulfo substituiertes C₁-C₄-Alkylaminosulfonyl, wie z.B. Methylaminosulfonyl, Aethylaminosulfonyl oder β-Sulfoäthylaminosulfonyl, substituiert sein.

Bevorzugt ist eine Farbstoffmischung, die mindestens einen Farbstoff der Formel (2), worin D Phenyl, Thiophenyl oder Benzthiazolyl ist, wobei jeder der genannten Reste durch Halogen, C₁-C₄-Alkyl, C₁-C₄-Alkoxy, C₁-C₄-Alkoxycarbonyl, Sulfo oder gegebenenfalls im Alkylteil durch Sulfo substituiertes C₁-C₄-Alkylaminosulfonyl substituiert sein kann , R₂ C₁-C₄-Alkyl, R₃ Benzyl oder gegebenenfalls durch Sulfo oder Sulfato substituiertes C₁-C₄-Alkyl und R₄ Wasserstoff oder C₁-C₄-Alkyl ist, enthält. Vorzugsweise ist in der oben angegebenen Farbstoffmischung der Rest D des Farbstoffs der Formel (2) Phenyl, welches durch Halogen, Sulfo oder im Alkylteil gegebenenfalls durch Sulfo substituiertes C₁-C₄-Alkylaminosulfonyl substituiert ist, oder durch C₁-C₄-Alkyl oder C₁-C₄-Alkoxycarbonyl substituiertes Thiophenyl oder gegebenenfalls durch C₁-C₄-Alkyl, C₁-C₄-Alkoxy oder Sulfo substituiertes Benzthiophenyl.

Weiterhin bevorzugt ist eine Farbstoffmischung, die als Farbstoff der Formel (3) einen Farbstoff der Formel 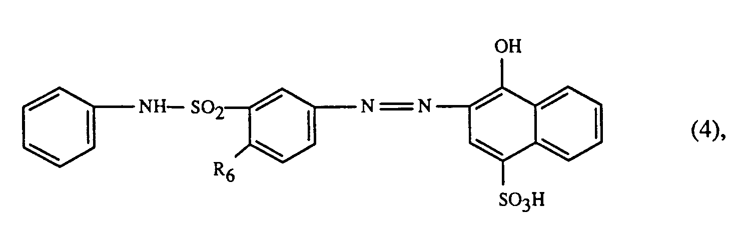
worin R₆ C₁-C₄-Alkyl, insbesondere Methyl, ist, enthält.

Besonders bevorzugt ist eine Farbstoffmischung, die mindestens einen Farbstoff der Formel (2), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, R₂ C₁-C₄-Alkyl, R₃ Benzyl oder gegebenenfalls durch Sulfo oder Sulfato substituiertes C₁-C₄-Alkyl und R₄ Wasserstoff oder C₁-C₄-Alkyl ist, und/oder einen Farbstoff der Formel (4), worin R₆ C₁-C₄-Alkyl, insbesondere Methyl, ist, enthält.

Ganz besonders bevorzugt ist eine Farbstoffmischung, die einen Farbstoff der Formel (1), worin R₁ Methyl oder Aethyl, insbesondere Methyl, ist, und mindestens einen Farbstoff der Formel (2), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, R₂ Aethyl, R₃ Aethyl, β-Sulfatoäthyl, 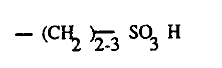
oder Benzyl und R₄ Wasserstoff oder Methyl ist, und/oder einen Farbstoff der Formel (4), worin R₆ Methyl ist, enthält.

Besonders wichtig ist eine Farbstoffmischung, die einen Farbstoff der Formel (1), worin R₁ Methyl oder Aethyl, insbesondere Methyl, ist, und mindestens einen Farbstoff der Formeln (5) bis (10) und (4): 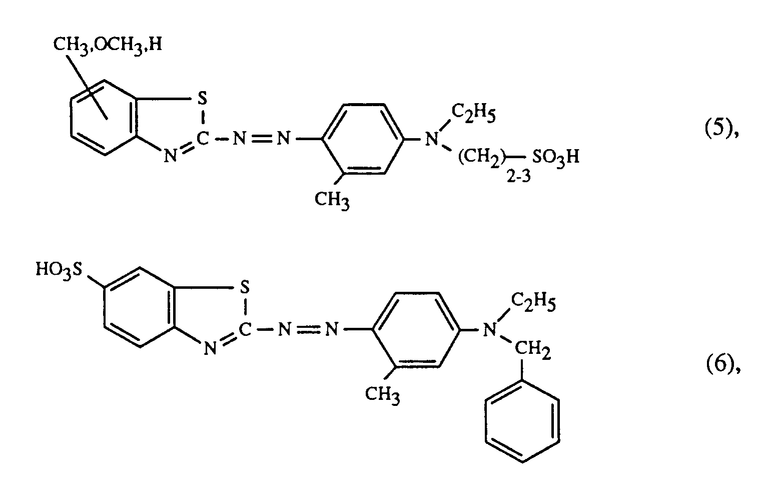 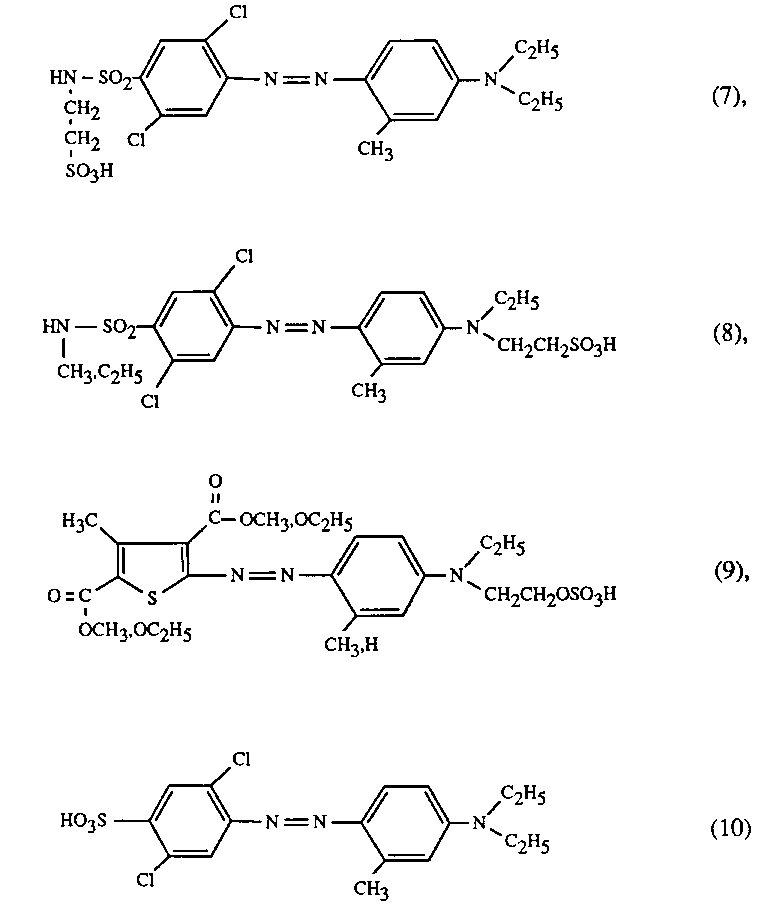
und
einen Farbstoff der Formel (4), worin R₆ Methyl ist, enthält. Die besonders wichtigen Farbstoffmischungen enthalten somit einen Farbstoff der Formel (1) und mindestens einen der Farbstoffe der Formeln (4), (5), (6), (7), (8), (9) und (10).

Ganz besonders wichtig ist eine Farbstoffmischung, die einen Farbstoff der Formel (1), worin R₁ Methyl oder Aethyl, insbesondere Methyl, ist, und mindestens einen Farbstoff der Formeln (6), (7) oder (8) enthält.

In den erfindungsgemässen Farbstoffmischungen ist das Verhältnis der Farbstoffe der Formeln (1) und (2) oder (3) oder das Verhältnis der Farbstoffe der Formeln (1) und (4), (5), (6), (7), (8), (9) oder (10) von 10:90 bis 90:10 und insbesondere von 40:60 bis 60:40 bevorzugt. Das Verhältnis der Farbstoffe der Formeln (1) und (2) oder (3) und insbesondere das Verhältnis der Farbstoffe der Formeln (1) und (4), (5), (6), (7), (8), (9) oder (10) von 55:45 bis 45:55 ist ganz besonders bevorzugt.

Die Farbstoffe der Formeln (1), (2) und (3) sind an sich bekannt oder können in Analogie zu bekannten Farbstoffen hergestellt werden.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Gegenstand der Erfindung ist ferner ein Verfahren zum Färben und Bedrucken von natürlichen oder synthetischen Polyamidmaterialien mit einer Farbstoffmischung, die den Farbstoff der Formel (1) und mindestens einen Farbstoff der Formeln (2) und (3) enthält. Als synthetische Polyamidmaterialien kommen z.B. Polyamid 6.6- oder Polyamid 6-Fasermaterialien in Betracht und als natürliche Polyamidmaterialien z.B. Wolle. Zum Färben und Bedrücken werden dabei die üblichen Färbe- bzw. Druckverfahren angewendet.

Die Farbstoffmischung mit dem Farbstoff der Formel (1) und mindestens einem Farbstoff der Formeln (2) und (3) eignet sich besonders zum Färben und Bedrücken in Kombination mit anderen Farbstoffen und insbesondere zum Färben und Bedrücken nach dem Trichromie-Prinzip. Unter Trichromie ist dabei die additive Farbmischung dreier passend gewählter gelb-, rot- und blaufärbender Farbstoffe in den zur Erzielung der gewünschten Nuance notwendigen Mengen zu verstehen. Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässe Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen sowie gleichmässiges gutes Ziehverhalten auf unterschiedlichen Fasermaterialien aus.

Das zu färbende oder zu bedrückende Textilmaterial kann in verschiedenen Verarbeitungsformen vorliegen, wie z.B. als Faser, Garn, Gewebe oder Gewirke und insbesondere in Form von Teppichen.

In der erfindungsgemässen Farbstoffmischung liegen die Farbstoffe der Formeln (1) und (2) bzw. (3) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze wie z.B. Kochsalz oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker wie z.B. Alginate und Celluloseäther, enthalten.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

### Beispiel 1: Zur Herstellung der Farbstoffmischung, die einen Farbstoff der Formel

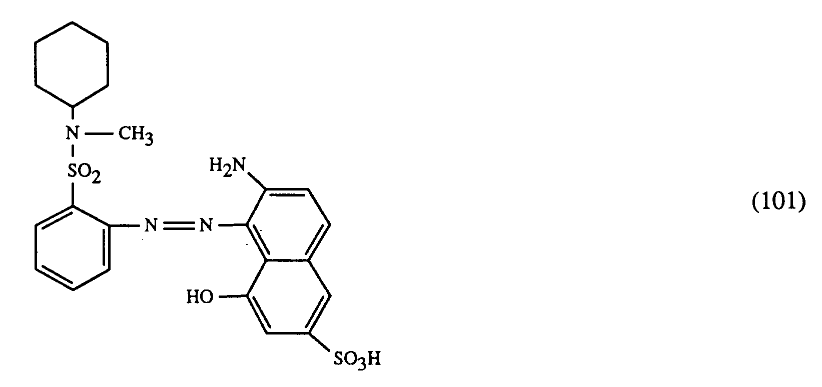

und einen Farbstoff der Formel 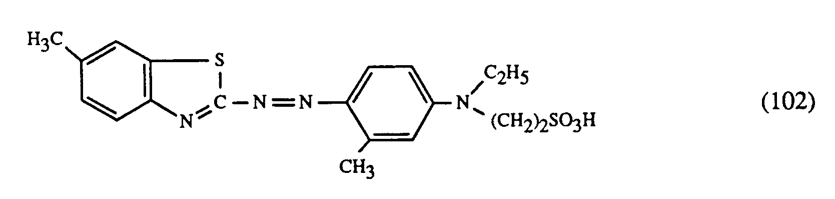
oder 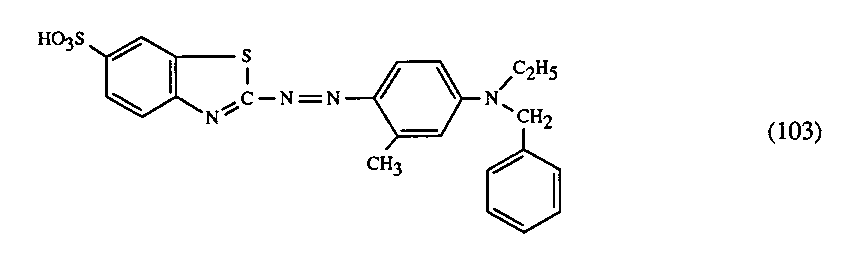
oder 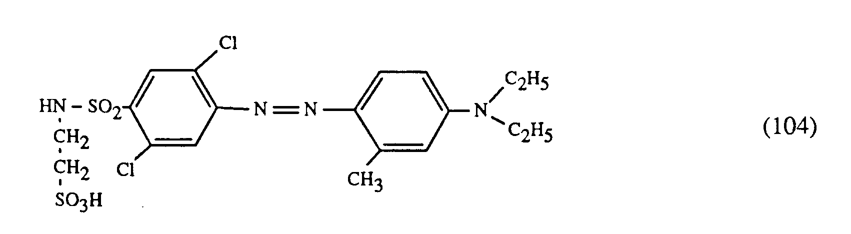
oder 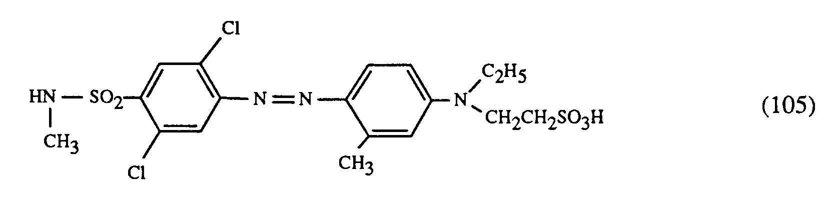
oder 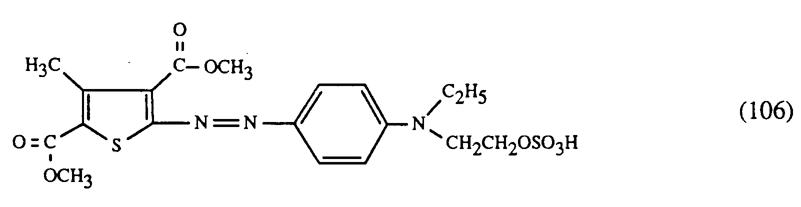
oder 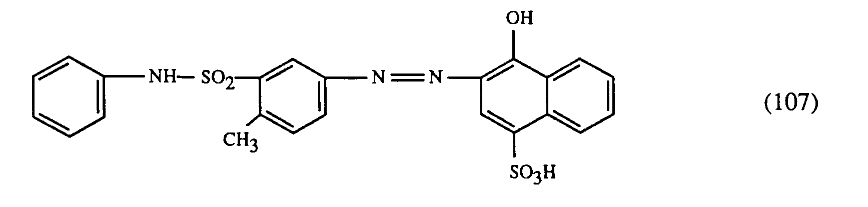
oder 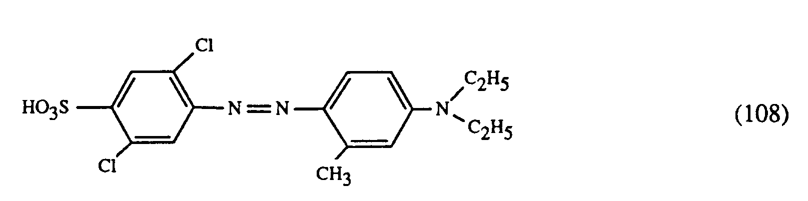
bzw. einen Farbstoff der Formel (101), (102) und (107) enthält, werden in einem Mixer
a) 30 Teile des Farbstoffs der Formel (101) und 70 Teile des Farbstoffs der Formel (102) homogen gemischt und ergeben 100 Teile der Mischung, die im folgenden als Farbstoffmischung A bezeichnet wird;
b) 60 Teile des Farbstoffs der Formel (101) und 40 Teile des Farbstoffs der Formel (104) homogen gemischt und ergeben 100 Teile der Mischung, die im folgenden als Farbstoffmischung B bezeichnet wird;
c) 80 Teile des Farbstoffs der Formel (101) und 20 Teile des Farbstoffs der Formel (103) homogen gemischt und ergeben 100 Teile der Mischung, die im folgenden als Farbstoffmischung C bezeichnet wird;
d) 30 Teile des Farbstoffs der Formel (105) und 70 Teile des Farbstoffs der Formel (101) homogen gemischt und ergeben 100 Teile der Mischung, die im folgenden als Farbstoffmischung D bezeichnet wird;
e) 60 Teile des Farbstoffs der Formel (106) und 40 Teile des Farbstoffs der Formel (101) homogen gemischt und ergeben 100 Teile der Mischung, die im folgenden als Farbstoffmischung E bezeichnet wird;
f) 80 Teile des Farbstoffs der Formel (107) und 20 Teile des Farbstoffs der Formel (101) homogen gemischt und ergeben 100 Teile der Mischung, die im folgenden als Farbstoffmischung F bezeichnet wird;
g) 10 Teile des Farbstoffs der Formel (108) und 90 Teile des Farbstoffs der Formel (101) homogen gemischt und ergeben 100 Teile der Mischung, die im folgenden als Farbstoffmischung G bezeichnet wird.
h) 50 Teile des Farbstoffs der Formel (101), 25 Teile des Farbstoffs der Formel (102)und 25 Teile des Farbstoffs der Formel (107) homogen gemischt und ergeben 100 Teile der Mischung, die im folgenden als Farbstoffmischung H bezeichnet wird.

### Beispiel 2: Man färbt 10 Teile Polyamid 6.6-Fasermaterial (Helancatrikot) in 500 Teilen einer wässrigen Flotte, die 2 g/l Ammonacetat enthält und mit Essigsäure auf pH 5 gestellt wird. Als Farbstoffe werden 0,12 % der roten Farbstoffmischung A gemäss Beispiel 1a), 0,27 % des gelben Farbstoffs der Formel

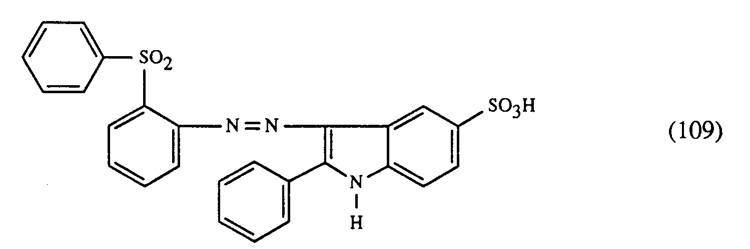

und 0,13 % des blauen Farbstoffs der Formel 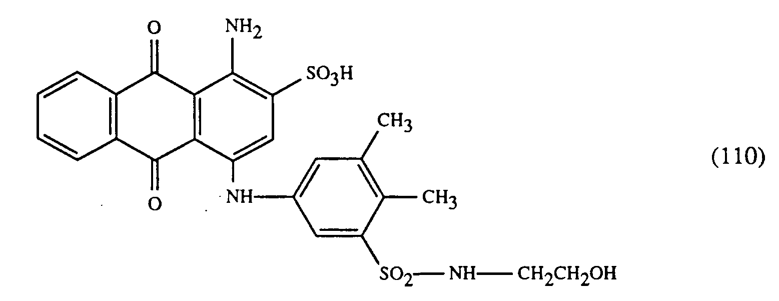
verwendet, wobei sich die Mengenangaben auf das Fasergewicht beziehen. Die Färbedauer bei einer Temperatur von 60 bis 98° beträgt 30 bis 90 Minuten. Das gefärbte Polyamid 6.6-Fasermaterial wird anschliessend herausgenommen und wie üblich gespült und getrocknet. Man erhält ein in neutral braunem Farbton völlig egal gefärbtes Gewebestück, das keinerlei materialbedingte Streifigkeit aufweist.

Anstelle von 0,13% des Farbstoffs der Formel (110) kann in Beispiel 2 auch eine äquimolare Menge des Farbstoffs C.I. Acid Blue 40, C.I. Acid Blue 258, C.I. Acid Blue 288, C.I. Acid Blue 324 oder C.I. Acid Blue 336 verwendet werden. Ebenso kann in Beispiel 2 anstelle von 0,27% des Farbstoffs der Formel (109) eine äquimolare Menge des Farbstoffs C.I. Acid Yellow 199 oder C.I. Acid Yellow 219 verwendet werden.

### Beispiele 3 bis 9: Verwendet man anstelle von 0,12 % der roten Farbstoffmischung A und 0,27 % des gelben Farbstoffs der Formel (109) sowie 0,13 % des blauen Farbstoffs der Formel (110) die in der folgenden Tabelle 1 angegebenen Farbstoffe der Formeln (109) und (110) sowie die Farbstoffmischungen aus Beispiel 1, so erhält man die in dem angegebenen Farbton völlig egal gefärbten Gewebestücke.

**Tabelle 1**

| Beispiel | verwendete Farbstoffe | Farbton |
|---|---|---|
| 3 | 0,18 % der Farbstoffmischung B | rotstichig braun |
| | 0,18 % des Farbstoffs der Formel (109) | |
| | 0,077 % des Farbstoffs der Formel (110) | |
| 4 | 0,04 % der Farbstoffmischung C | oliv |
| | 0,25 % des Farbstoffs der Formel (109) | |
| | 0,14% des Farbstoffs der Formel (110) | |
| 5 | 0,12 % der Farbstoffmischung D | neutrales braun |
| | 0,27 % des Farbstoffs der Formel (109) | |
| | 0,13% des Farbstoffs der Formel (110) | |
| 6 | 0,17 % der Farbstoffmischung E | rotstichig braun |
| | 0,18 % des Farbstoffs der Formel (109) | |
| | 0,07 % des Farbstoffs der Formel (110) | |
| 7 | 0,036 % der Farbstoffmischung F | oliv |
| | 0,25 % des Farbstoffs der Formel (109) | |
| | 0,124% des Farbstoffs der Formel (110) | |
| 8 | 0,18 % der Farbstoffmischung G | rotstichig braun |
| | 0,18 % des Farbstoffs der Formel (109) | |
| | 0,08 % des Farbstoffs der Formel (110) | |
| 9 | 0,20 % der Farbstoffmischung H | rotstichig braun |
| | 0,18 % des Farbstoffs der Formel (109) | |
| | 0,10 % des Farbstoffs der Formel (110) | |

Verfährt man wie in Beispiel 2 angegeben, verwendet jedoch anstelle von 0,12 % der roten Farbstoffmischung A 0,12% einer roten Farbstoffmischung aus 50 Teilen des Farbstoffs der Formel 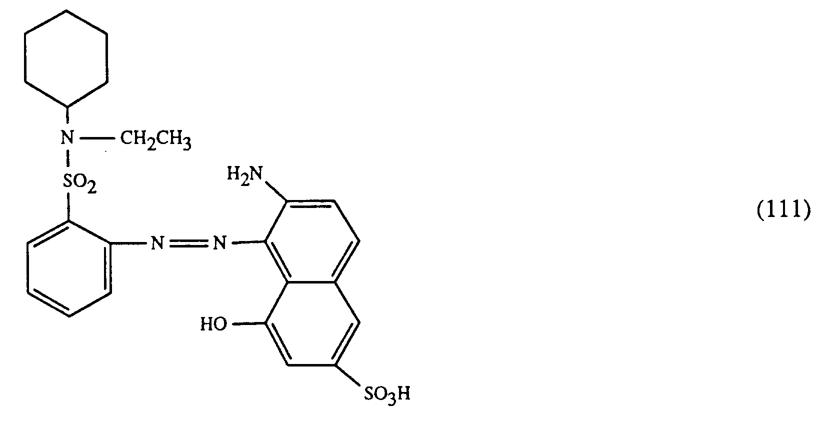
und 50 Teilen des Farbstoffs der Formel (107), so erhält man ein in neutral braunem Farbton völlig egal gefärbtes Gewebestück.

### Beispiel 10: Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,12 % der Farbstoffmischung B, 0,27 % des Farbstoffs der Formel (109) und 0,13 % des Farbstoffs der Formel (110) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

### Beispiel 11: (Teppichausziehverfahren):

Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Öffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g der roten Farbstoffmischung B und 1,8 g des gelben Farbstoffs der Formel (109), beide gelöst in 200 ml heissem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d.h. die Farbstoffe sind zu über 99 % auf das Färbegut aufgezogen. Die Beheizung wird abgestellt und mit Hilfe der indirekten Kühlung der Färbeflotte auf 60° gekühlt. Während dieser Zeit erhöht sich der pH-Wert auf 3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal orange gefärbt.

## Patentansprüche (Patentansprüche für folgende(n) Vertragsstaat(en): BE, CH, LI, DE, DK, FR, GB, IT, NL)

1. Farbstoffmischung, dadurch gekennzeichnet, dass sie einen Farbstoff der Formel 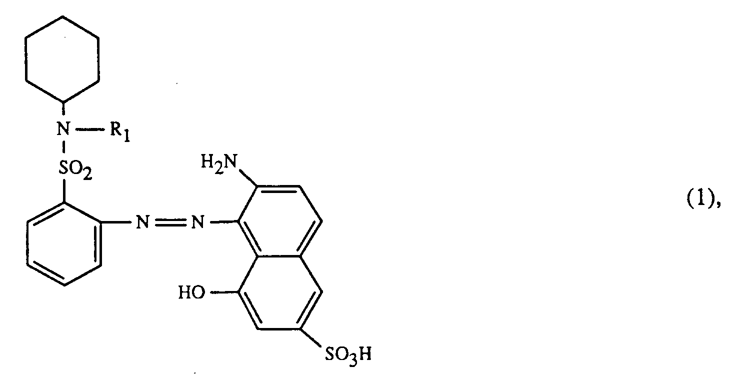 worin R₁ Methyl oder Aethyl ist, und mindestens einen Farbstoff der Formeln (2) und (3) 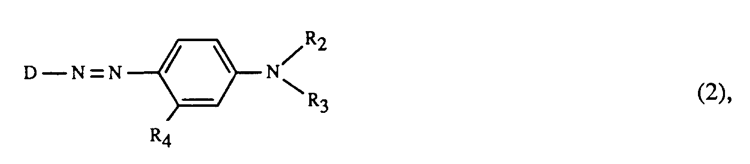 worin D gegebenenfalls substituiertes Phenyl, Thiophenyl oder Benzthiazolyl, R₂ C₁-C₈-Alkyl, R₃ gegebenenfalls substituiertes C₁-C₈-Alkyl und R₄ Wasserstoff oder C₁-C₄-Alkyl ist,
und 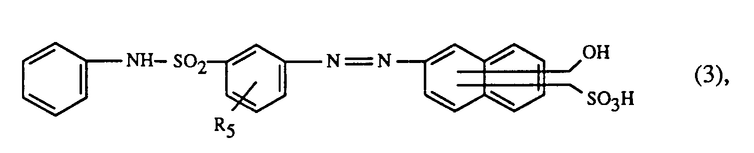 worin R₅ C₁-C₄-Alkyl ist, enthält.

2. Farbstoffmischung gemäss Anspruch 1, dadurch gekennzeichnet, dass sie einen Farbstoff der Formel (2), worin D Phenyl, Thiophenyl oder Benzthiazolyl ist, wobei jeder der genannten Reste durch Halogen, C₁-C₄-Alkyl, C₁-C₄-Alkoxy, C₁-C₄-Alkoxycarbonyl, Sulfo oder gegebenenfalls im Alkylteil durch Sulfo substituiertes C₁-C₄-Alkylaminosulfonyl substituiert sein kann , R₂ C₁-C₄-Alkyl, R₃ Benzyl oder gegebenenfalls durch Sulfo oder Sulfato substituiertes C₁-C₄-Alkyl und R₄ Wasserstoff oder C₁-C₄-Alkyl ist, enthält.

3. Farbstoffmischung gemäss einem der Ansprüche 1 und 2, dadurch gekennzeichnet, dass sie einen Farbstoff der Formel 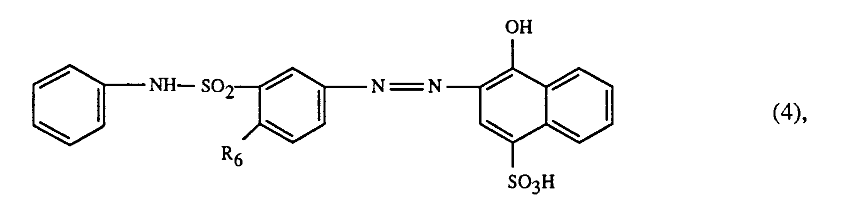 worin R₆ C₁-C₄-Alkyl, insbesondere Methyl, ist, enthält.

4. Farbstoffmischung gemäss Anspruch 1, dadurch gekennzeichnet, dass sie einen Farbstoff der Formel (1), worin R₁ Methyl oder Aethyl, insbesondere Methyl, ist, und einen Farbstoff der Formel (2), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, R₂ Aethyl, R₃ Aethyl, β-Sulfatoäthyl, 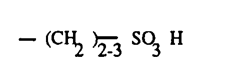 oder Benzyl und R₄ Wasserstoff oder Methyl ist, oder einen Farbstoff der Formel 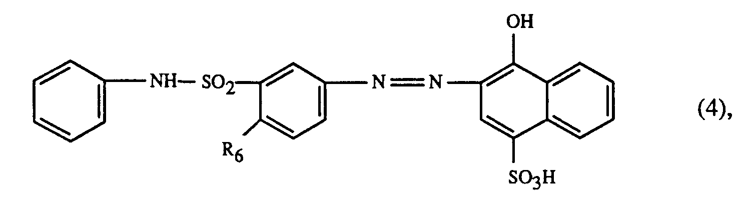 worin R₆ Methyl ist, enthält.

5. Farbstoffmischung gemäss Anspruch 4, dadurch gekennzeichnet, dass sie als Farbstoff der Formel (2) mindestens einen Farbstoff der Formeln (5) bis (10) 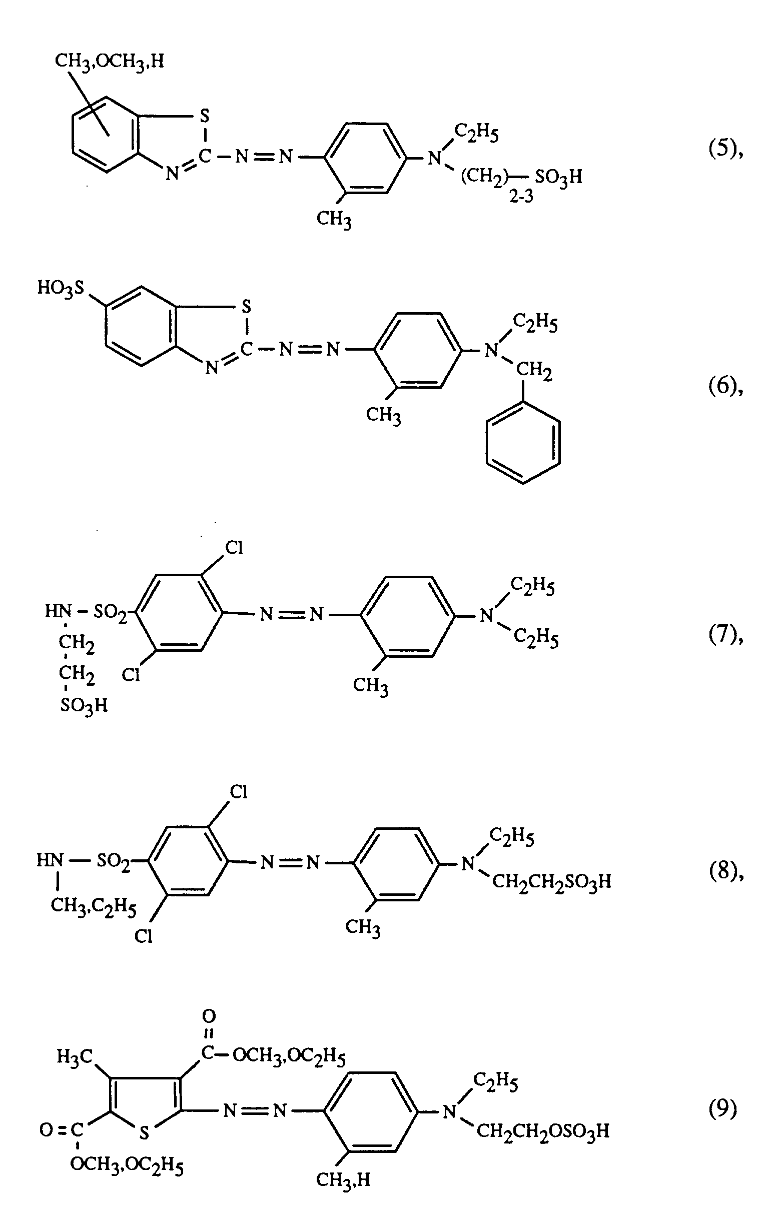 und 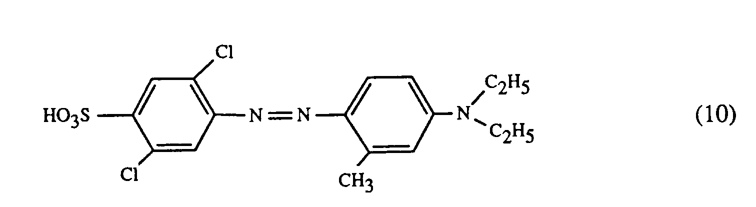 enthält.

6. Farbstoffmischung gemäss einem der Ansprüche 1 bis 5, dadurch gekennzeichnet, dass das Verhältnis der Farbstoffe der Formeln (1) und (2) oder (1) und (3) 10:90 bis 90:10, insbesondere 40:60 bis 60:40, vorzugsweise 45:55 bis 55:45 ist.

7. Verfahren zum Färben und Bedrucken von natürlichen und synthetischen Polyamidmaterialien mit einer Farbstoffmischung, dadurch gekennzeichnet, dass man eine Farbstoffmischung gemäss einem der Ansprüche 1 bis 6 verwendet.

8. Verfahren zum Färben und Bedrucken von natürlichen und synthetischen Polyamidmaterialien unter Verwendung der Farbstoffmischung gemäss einem der Ansprüche 1 bis 6 in Kombination mit anderen Farbstoffen.

9. Verfahren gemäss Anspruch 8 zum Trichromie-Färben oder -Bedrucken, dadurch gekennzeichnet, dass man eine Farbstoffmischung gemäss einem der Ansprüche 1 bis 6 in Kombination mit mindestens einem gelben oder orangen Farbstoff und mindestens einem blauen Farbstoff verwendet.

10. Verwendung der Farbstoffmischung gemäss Anspruch 1 zum Färben und Bedrucken von natürlichen und synthetischen Polyamidmaterialien.

11. Färbe- bzw. Druckpräparate, die eine Farbstoffmischung gemäss den Ansprüchen 1 bis 6 enthalten.

12. Das gemäss einem der Ansprüche 7 bis 9 oder 11 gefärbte oder bedruckte Material, insbesondere das Textilmaterial.

## Patentansprüche (Patentansprüche für folgende(n) Vertragsstaat(en): ES)

1. Verfahren zur Herstellung von Farbstoffmischungen, dadurch gekennzeichnet, dass man einen Farbstoff der Formel 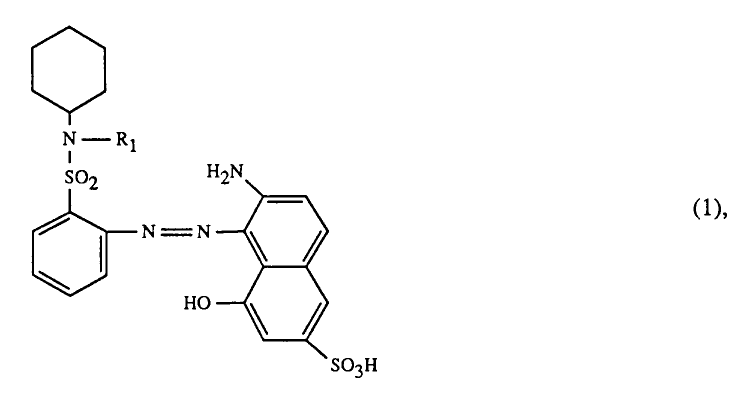 worin R₁ Methyl oder Aethyl ist, mit mindestens einem Farbstoff der Formeln (2) und (3) 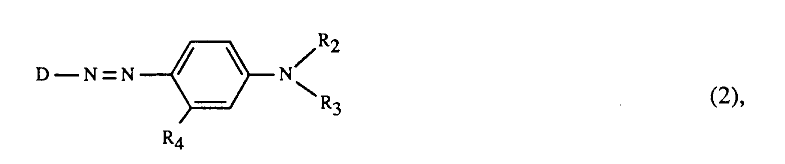 worin D gegebenenfalls substituiertes Phenyl, Thiophenyl oder Benzthiazolyl, R₂ C₁-C₈-Alkyl, R₃ gegebenenfalls substituiertes C₁-C₈-Alkyl und R₄ Wasserstoff oder C₁-C₄-Alkyl ist,
und 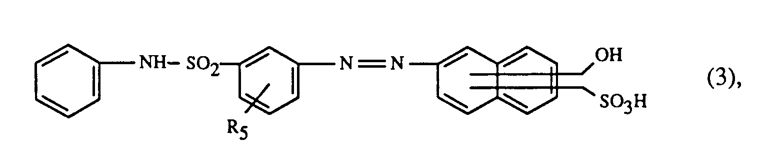 worin R₅ C₁-C₄-Alkyl ist, mischt.

2. Verfahren gemäss Anspruch 1, dadurch gekennzeichnet, dass man einen Farbstoff der Formel (2), worin D Phenyl, Thiophenyl oder Benzthiazolyl ist, wobei jeder der genannten Reste durch Halogen, C₁-C₄-Alkyl, C₁-C₄-Alkoxy, C₁-C₄-Alkoxycarbonyl, Sulfo oder gegebenenfalls im Alkylteil durch Sulfo substituiertes C₁-C₄-Alkylaminosulfonyl substituiert sein kann , R₂ C₁-C₄-Alkyl, R₃ Benzyl oder gegebenenfalls durch Sulfo oder Sulfato substituiertes C₁-C₄-Alkyl und R₄ Wasserstoff oder C₁-C₄-Alkyl ist, verwendet.

3. Verfahren gemäss einem der Ansprüche 1 und 2, dadurch gekennzeichnet, dass man einen Farbstoff der Formel 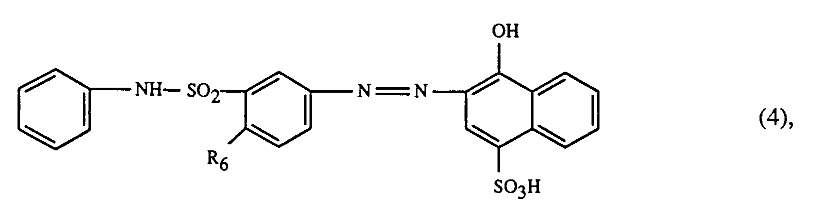 worin R₆ C₁-C₄-Alkyl, insbesondere Methyl, ist, verwendet.

4. Verfahren gemäss Anspruch 1, dadurch gekennzeichnet, dass man einen Farbstoff der Formel (1), worin R₁ Methyl oder Aethyl, insbesondere Methyl, ist, mit einem Farbstoff der Formel (2), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, R₂ Aethyl, R₃ Aethyl, β-Sulfatoäthyl, 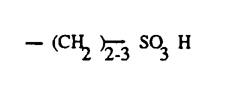 oder Benzyl und R₄ Wasserstoff oder Methyl ist, oder mit einem Farbstoff der Formel 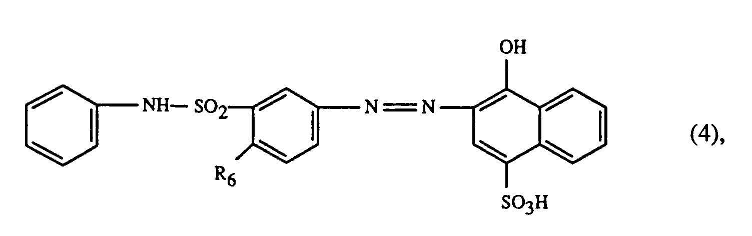 worin R₆ Methyl ist, mischt.

5. Verfahren gemäss Anspruch 4, dadurch gekennzeichnet, dass man als Farbstoff der Formel (2) mindestens einen Farbstoff der Formeln (5) bis (10) 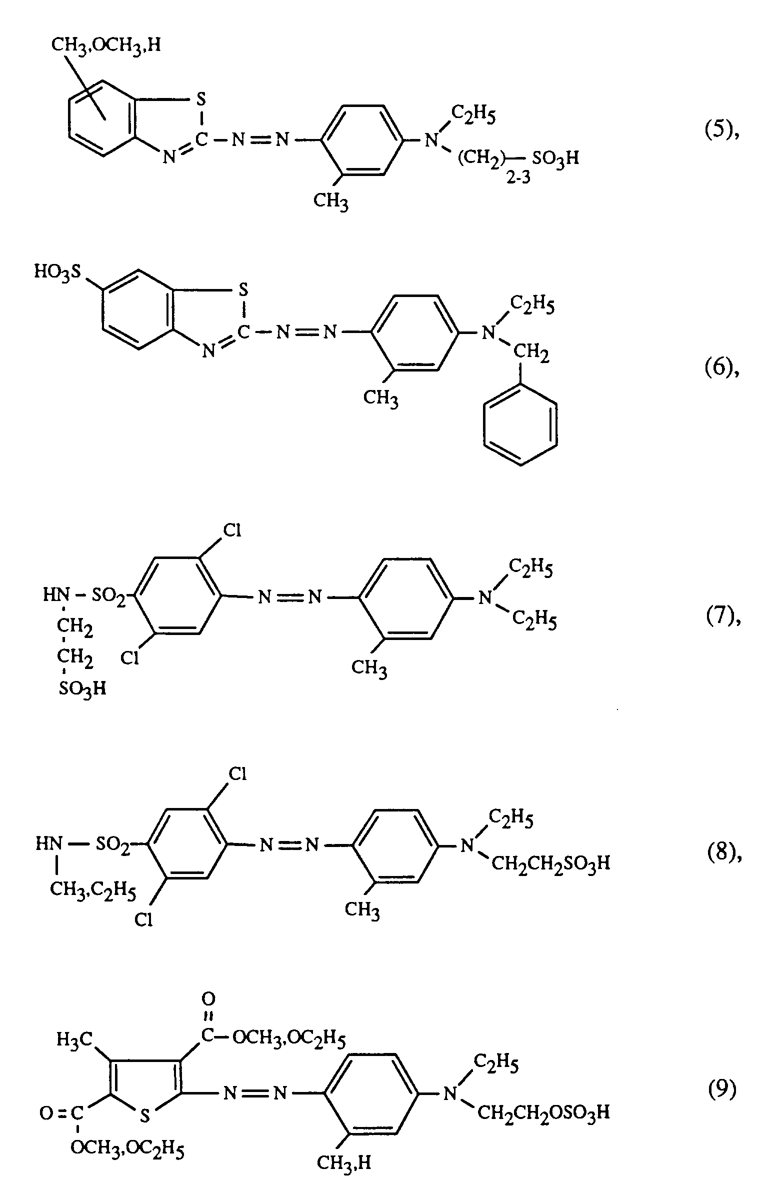 und 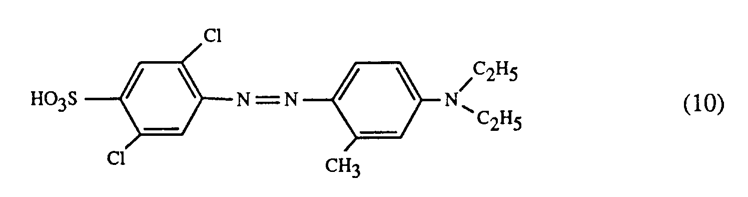 verwendet.

6. Verfahren gemäss einem der Ansprüche 1 bis 5, dadurch gekennzeichnet, dass man die Farbstoffe der Formeln (1) und (2) oder (1) und (3) im Verhältnis von 10:90 bis 90:10, insbesondere 40:60 bis 60:40, vorzugsweise 45:55 bis 55:45 verwendet.

7. Verfahren zum Färben und Bedrucken von natürlichen und synthetischen Polyamidmaterialien mit einer Farbstoffmischung, dadurch gekennzeichnet, dass man eine gemäss einem der Ansprüche 1 bis 6 erhaltene Farbstoffmischung verwendet.

8. Verfahren zum Färben und Bedrucken von natürlichen und synthetischen Polyamidmaterialien unter Verwendung der gemäss einem der Ansprüche 1 bis 6 erhaltenen Farbstoffmischung in Kombination mit anderen Farbstoffen.

9. Verfahren gemäss Anspruch 8 zum Trichromie-Färben oder -Bedrucken, dadurch gekennzeichnet, dass man eine gemäss einem der Ansprüche 1 bis 6 erhaltene Farbstoffmischung in Kombination mit mindestens einem gelben oder orangen Farbstoff und mindestens einem blauen Farbstoff verwendet.

10. Verwendung der gemäss Anspruch 1 erhaltenen Farbstoffmischung zum Färben und Bedrucken von natürlichen und synthetischen Polyamidmaterialien.

## Claims (Claims for the following Contracting State(s): BE, CH, LI, DE, DK, FR, GB, IT, NL)

1. A dye mixture which contains a dye of the formula 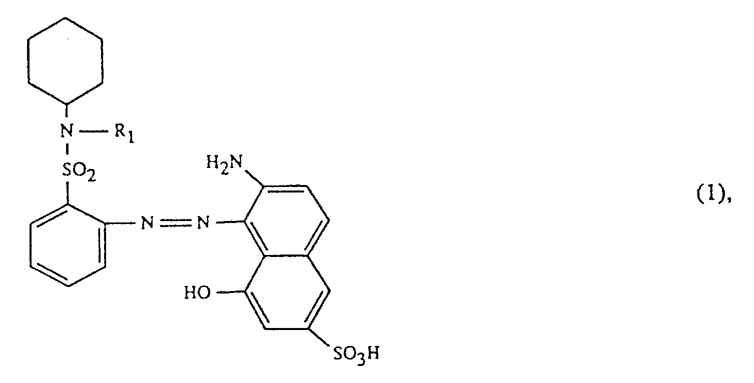 in which R₁ is methyl or ethyl, and at least one dye of the formulae (2) and (3) 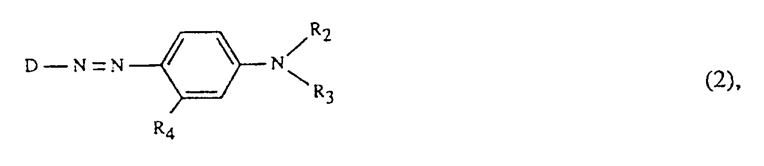 in which D is substituted or unsubstituted phenyl, thiophenyl or benzothiazolyl, R₂ is C₁-C₈alkyl, R₃ is substituted or unsubstituted C₁-C₈alkyl, and R₄ is hydrogen or C₁-C₄alkyl,
and 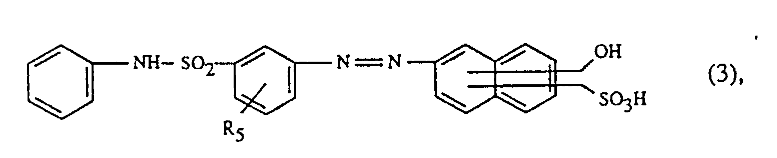 in which R₅ is C₁-C₄alkyl.

2. A dye mixture according to claim 1, which contains a dye of the formula (2) in which D is phenyl, thiophenyl or benzothiazolyl, in which each of the radicals mentioned can be substituted by halogen, C₁-C₄alkyl, C₁-C₄alkoxy, C₁-C₄alkoxycarbonyl or sulfo or by C₁-C₄alkylaminosulfonyl which is unsubstituted or substituted in the alkyl portion by sulfo, R₂ is C₁-C₄alkyl, R₃ is benzyl or is C₁-C₄alkyl which is unsubstituted or substituted by sulfo or sulfato, and R₄ is hydrogen or C₁-C₄alkyl.

3. A dye mixture according to either of claims 1 and 2, which contains a dye of the formula 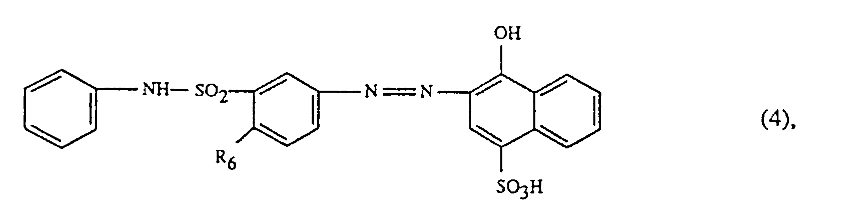 in which R₆ is C₁-C₄alkyl, in particular methyl.

4. A dye mixture according to claim 1, which contains a dye of the formula (1) in which R₁ is methyl or ethyl, in particular methyl, and a dye of the formula (2) in which D is phenyl which is substituted by chlorine, sulfo, methylaminosulfonyl, ethylaminosulfonyl or β-sulfoethylaminosulfonyl, thiophenyl which is substituted by methyl, methoxy- or ethoxycarbonyl, or benzothiophenyl which is unsubstituted or substituted by methyl, methoxy or sulfo, R₂ is ethyl, R₃ is ethyl, β-sulfatoethyl, 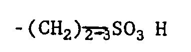 or benzyl, and R₄ is hydrogen or methyl, or a dye of the formula 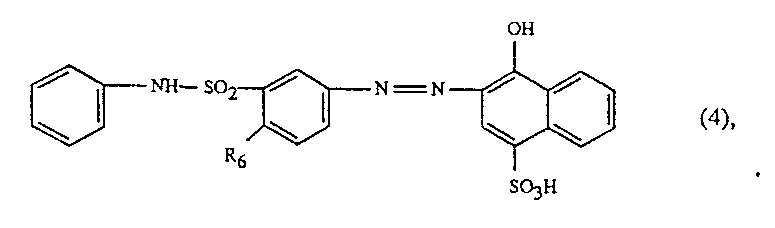 in which R₆ is methyl.

5. A dye mixture according to claim 4, which contains as dye of the formula (2) at least one dye of the formulae (5) to (10) 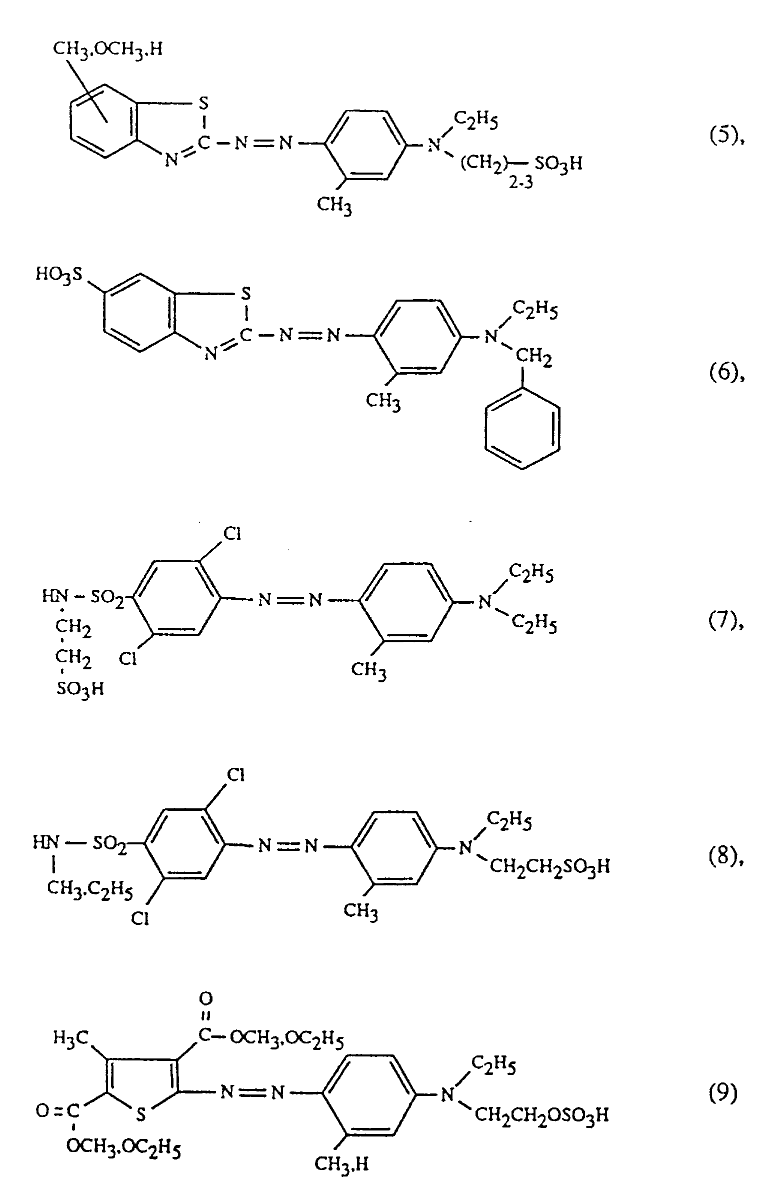 and

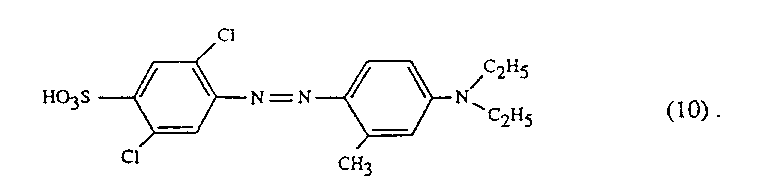

6. A dye mixture according to any of claims 1 to 5, wherein the ratio of the dyes of the formulae (1) to (2) or (1) to (3) is 10:90 to 90:10, in particular 40:60 to 60:40, preferably 45:55 to 55:45.

7. A process for the dyeing and printing of natural and synthetic polyamide materials by means of a dye mixture, wherein a dye mixture according to any of claims 1 to 6 is used.

8. A process for the dyeing and printing of natural and synthetic polyamide materials using a dye mixture according to any of claims 1 to 6 in combination with other dyes.

9. A process according to claim 8 for trichromatic dyeing or printing, wherein a dye mixture according to any of claims 1 to 6 is used in combination with at least one yellow or orange dye and at least one blue dye.

10. Use of a dye mixture according to claim 1 for the dyeing and printing of natural and synthetic polyamide materials.

11. A dyeing or printing preparation containing a dye mixture according to claims 1 to 6.

12. A material dyed or printed according to any of claims 7 to 9 or 11, in particular a textile material.

## Claims (Claims for the following Contracting State(s): ES)

1. A process for the preparation of dye mixtures, which comprises mixing a dye of the formula 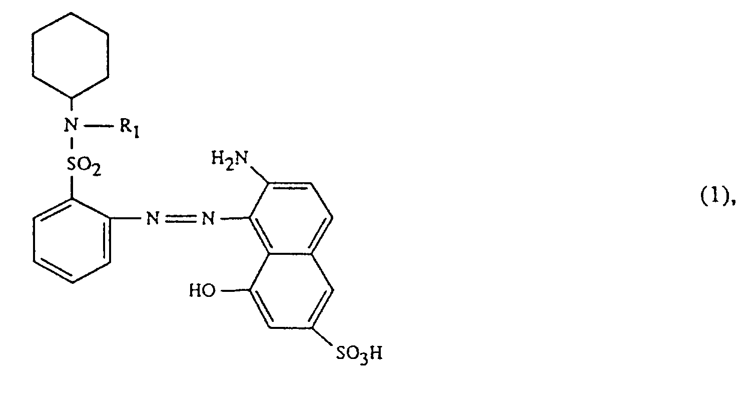 in which R₁ is methyl or ethyl, with at least one dye of the formulae (2) and (3) 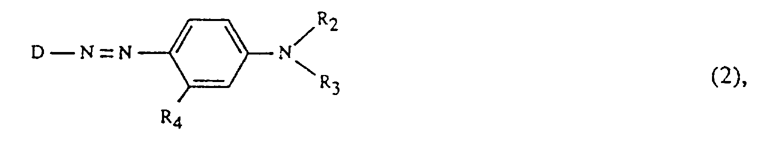 in which D is substituted or unsubstituted phenyl, thiophenyl or benzothiazolyl, R₂ is C₁-C₈alkyl, R₃ is substituted or unsubstituted C₁-C₈alkyl, and R₄ is hydrogen or C₁-C₄alkyl,
and 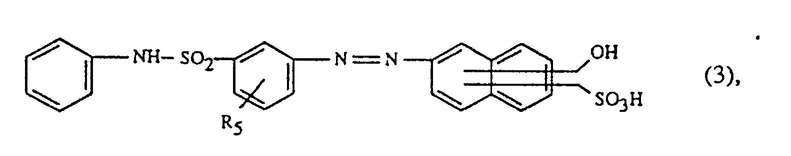 in which R₅ is C₁-C₄alkyl.

2. A process according to claim 1, which comprises using a dye of the formula (2) in which D is phenyl, thiophenyl or benzothiazolyl, in which each of the radicals mentioned can be substituted by halogen, C₁-C₄alkyl, C₁-C₄alkoxy, C₁-C₄alkoxycarbonyl or sulfo or by C₁-C₄alkylaminosulfonyl which is unsubstituted or substituted in the alkyl portion by sulfo, R₂ is C₁-C₄alkyl, R₃ is benzyl or is C₁-C₄alkyl which is unsubstituted or substituted by sulfo or sulfato, and R₄ is hydrogen or C₁-C₄alkyl.

3. A process according to either of claims 1 and 2, which comprises using a dye of the formula 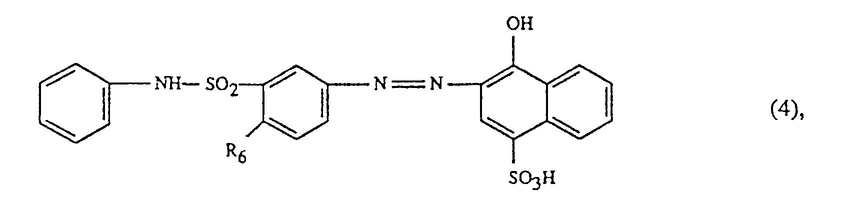 in which R₆ is C₁-C₄alkyl, in particular methyl.

4. A process according to claim 1, which comprises mixing a dye of the formula (1) in which R₁ is methyl or ethyl, in particular methyl, with a dye of the formula (2) in which D is phenyl which is substituted by chlorine, sulfo, methylaminosulfonyl, ethylaminosulfonyl or β-sulfoethylaminosulfonyl, thiophenyl which is substituted by methyl, methoxy- or ethoxycarbonyl, or benzothiophenyl which is unsubstituted or substituted by methyl, methoxy or sulfo, R₂ is ethyl, R₃ is ethyl, β-sulfato-ethyl, 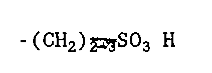 or benzyl, and R₄ is hydrogen or methyl, or with a dye of the formula 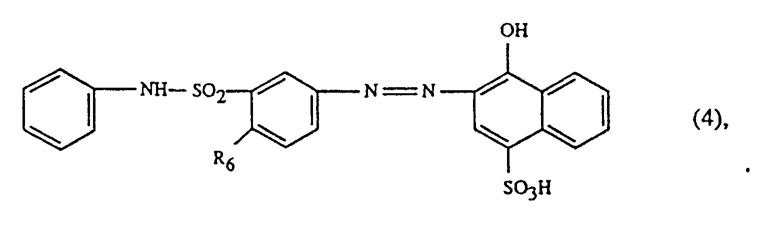 in which R₆ is methyl.

5. A process according to claim 4, which comprises using as dye of the formula (2) at least one dye of the formulae (5) to (10) 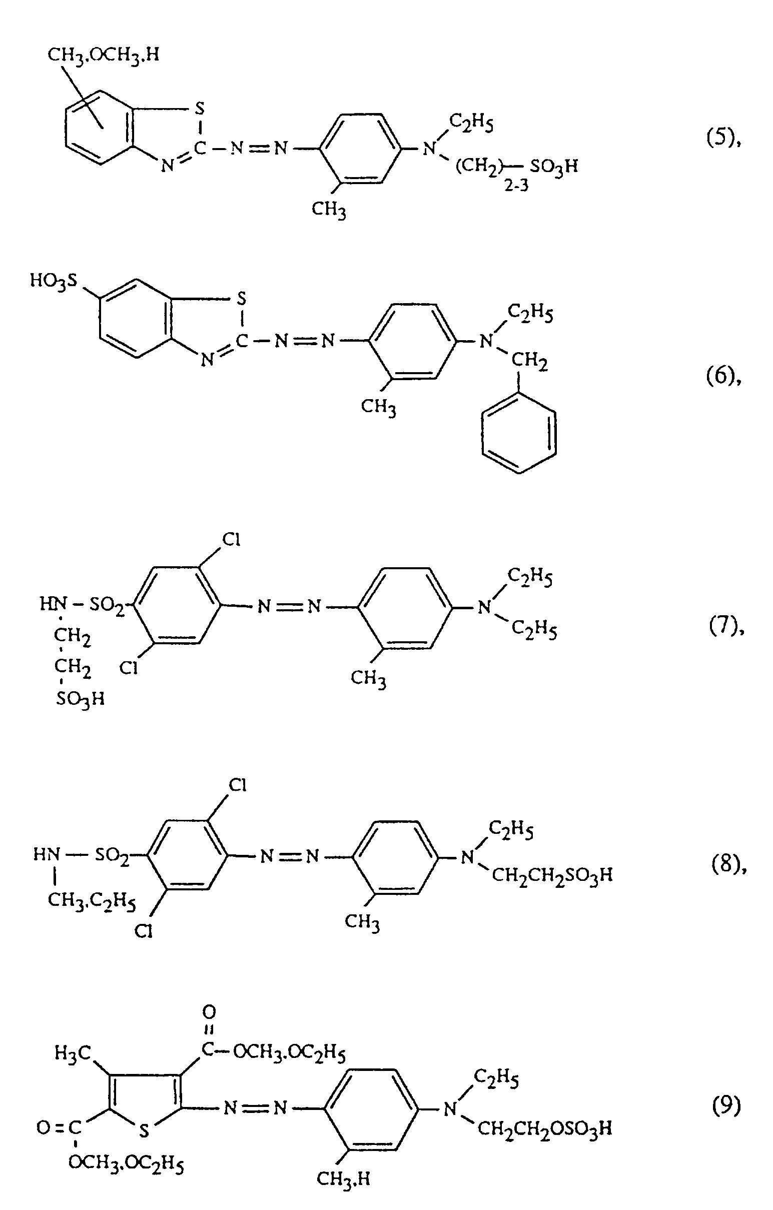 and

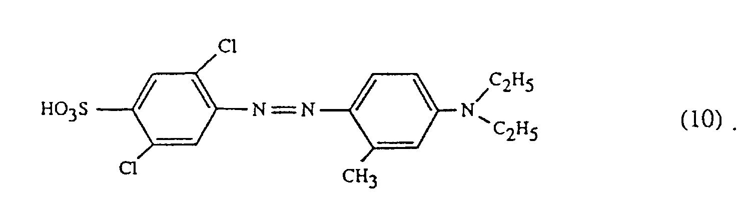

6. A process according to any of claims 1 to 5, wherein the ratio used of the dyes of the formulae (1) to (2) or (1) to (3) is 10:90 to 90:10, in particular 40:60 to 60:40, preferably 45:55 to 55:45.

7. A process for the dyeing and printing of natural and synthetic polyamide materials by means of a dye mixture, wherein a dye mixture obtained according to any of claims 1 to 6 is used.

8. A process for the dyeing and printing of natural and synthetic polyamide materials using a dye mixture obtained according to any of claims 1 to 6 in combination with other dyes.

9. A process according to claim 8 for trichromatic dyeing or printing, wherein a dye mixture obtained according to any of claims 1 to 6 is used in combination with at least one yellow or orange dye and at least one blue dye.

10. Use of a dye mixture obtained according to claim 1 for the dyeing and printing of natural and synthetic polyamide materials.

## Revendications (Revendications pour l'(les) Etat(s) contractant(s) suivant(s): BE, CH, LI, DE, DK, FR, GB, IT, NL)

1. Mélange de colorants, caractérisé en ce qu'il contient un colorant de formule 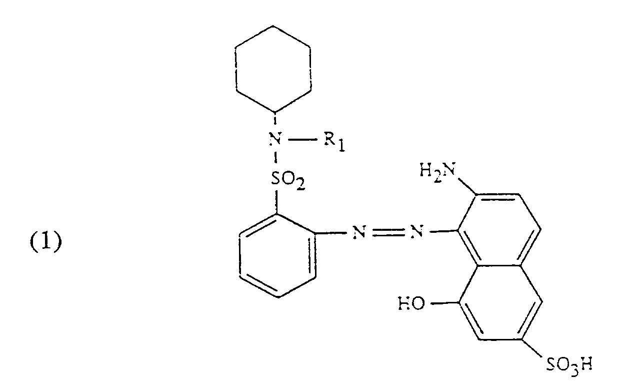 dans laquelle R₁ représente un groupe méthyle ou éthyle, et au moins un colorant de formule (2) et (3) 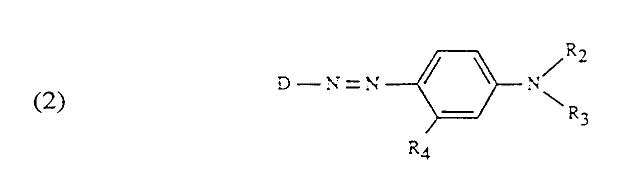 dans laquelle D est un groupe phényle, thiophényle ou benzothiazole éventuellement substitués, R₂ représente un groupe alkyle en C₁-C₈, R₃ représente un groupe alkyle en C₁-C₈, éventuellement substitué, et R₄ un atome d'hydrogène ou un groupe alkyle en C₁-C₄, et 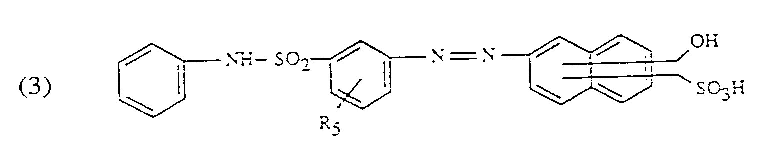 dans laquelle R₅ représente un groupe alkyle en C₁-C₄.

2. Mélange de colorants conforme à la revendication 1, caractérisé en ce qu'il contient un colorant de formule (2), dans laquelle D représente un groupe phényle, thiophényle ou benzothiazole, chacun des résidus cités pouvant être substitués par un atome d'halogène, un groupe alkyle en C₁-C₄, un groupe alcoxy en C₁-C₄, un groupe (alcoxy en C₁-C₄)-carbonyle un groupe sulfo ou un groupe alkylaminosulfonyle en C₁-C₄ pouvant être substitué dans la partie alkyle par une fonction sulfo, R₂ représente un groupe alkyle en C₁-C₄, R₃ un groupe benzyle ou un groupe alkyle en C₁-C₄, éventuellement substitué par un groupe sulfo ou sulfato et R₄ représente un atome d'hydrogène ou un groupe alkyle en C₁-C₄.

3. Mélange de colorants conforme à une des revendications 1 ou 2, caractérisé en ce qu'il contient un colorant de formule 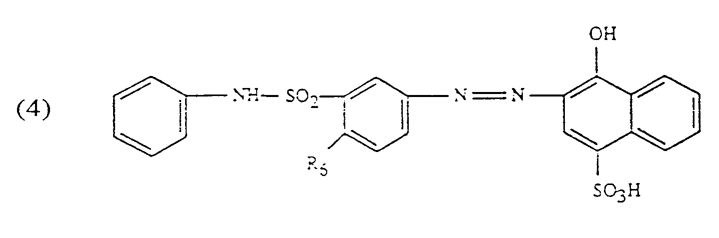 dans laquelle R₆ représente un groupe alkyle en C₁-C₄, en particulier un groupe méthyle.

4. Mélange de colorants conformes à la revendication 1, caractérisé en ce qu'il contient un colorant de formule (1) dans laquelle R₁ représente un groupe méthyle ou éthyle, en particulier un groupe méthyle, et au moins un colorant de formule (2), dans laquelle D représente un groupe phényle substitué par un atome de chlore, un groupe sulfo, méthylaminosulfonyle, éthylaminosulfonyle, ou β-sulfoéthylaminosulfonyle, un groupe thiophényle substitué par un groupe méthyle, méthoxy ou éthoxycarbonyle ou un groupe benzothiophényle éventuellement substitué par un groupe méthyle, méthoxy ou sulfo, R₂ représente un groupe éthyle, R₃ un groupe éthyle, β-sulfatoéthyle, -(CH₂)₂₋₃-SO₃H ou benzyle et R₄ représente un atome d'hydrogène ou un groupe méthyle, ou un colorant de formule 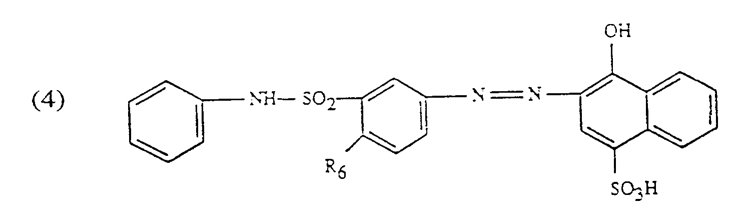 dans laquelle R₆ représente un groupe méthyle

5. Mélange de colorants conforme à la revendication 4, caractérisé en ce qu'il contient, comme colorant de formule (2), au moins un colorant de formule (5) à (10):

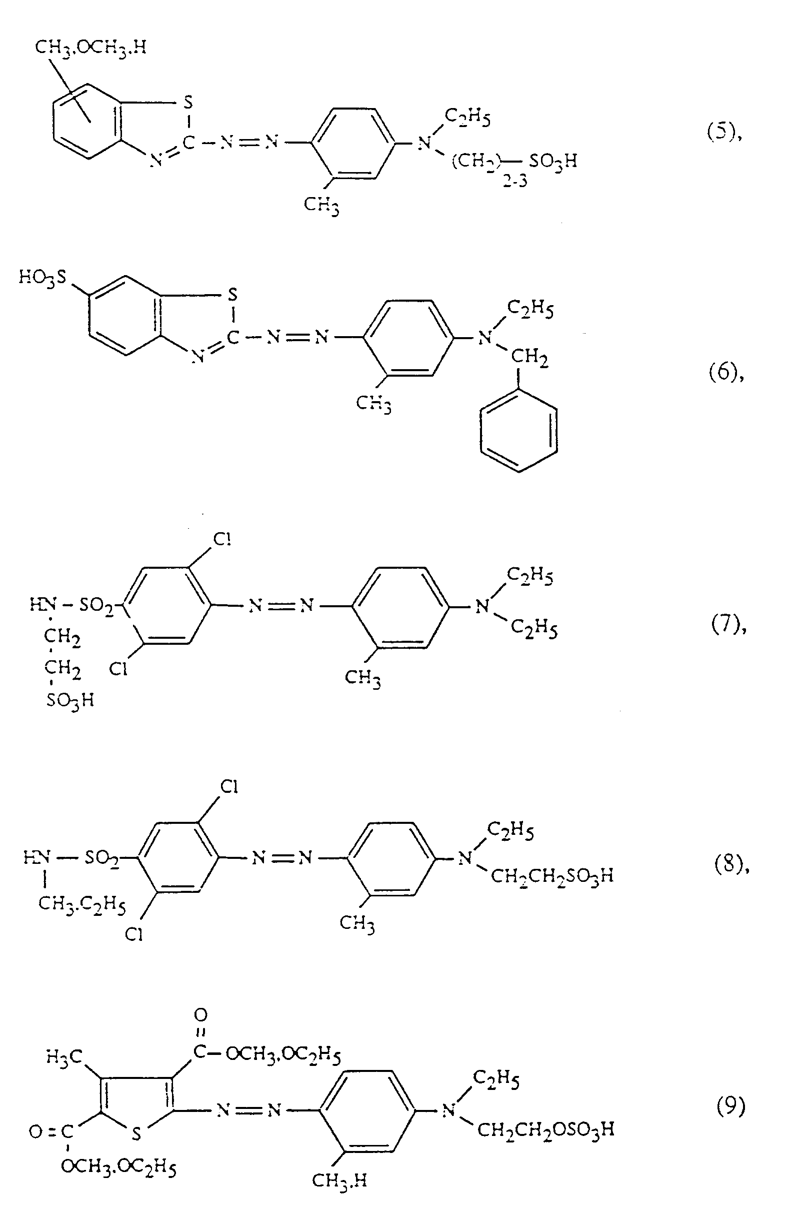

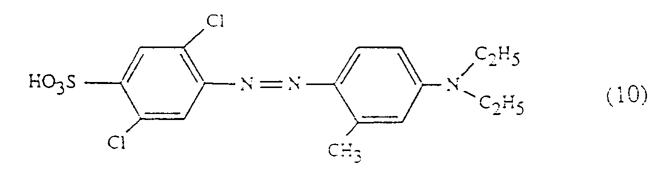

6. Mélange de colorants conforme à une des revendications 1 à 5, caractérisé en ce que le rapport du colorant de formule (1) aux colorants de formule (2) ou (3) est compris entre 10:90 et 90:10, en particulier entre 40:60 et 60:40, et de préférence entre 45:55 et 55:45.

7. Procédé pour la teinture et l'impression de matériaux en polyamide naturel ou synthétique avec un mélange de colorants, caractérisé en ce que l'on utilise un mélange de colorants conforme à une des revendications 1 à 6.

8. Procédé pour la teinture et l'impression de matériaux en polyamide naturel ou synthétique utilisant un mélange de colorants conforme à une des revendications 1 à 6 en combinaison avec d'autres colorants.

9. Procédé conforme à la revendication 8, pour la teinture ou l'impression en trichromie, caractérisé en ce que l'on utilise un mélange de colorants conforme à une des revendications 1 à 6 en combinaison avec au moins un colorant jaune ou orange et au moins un colorant bleu.

10. Utilisation du mélange de colorants conforme à la revendication 1 pour la teinture et l'impression de matériaux en polyamide synthétique et naturel.

11. Préparations pour teintures ou impressions contenant un mélange de colorants conforme aux revendications 1 à 6.

12. Matériau, en particulier matériau textile, teint ou imprimé selon une des revendications 7 à 9 ou 11.

## Revendications (Revendications pour l'(les) Etat(s) contractant(s) suivant(s): ES)

1. Procédé de préparation d'un mélange de colorants, caractérisé en ce que l'on mélange un colorant de formule 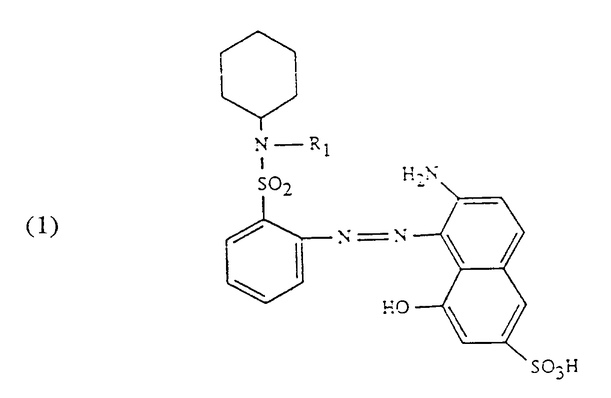 dans laquelle R₁ représente un groupe méthyle ou éthyle, et au moins un colorant de formule (2) et (3) 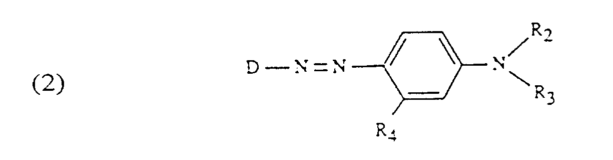 dans laquelle D est un groupe phényle, thiophényle ou benzothiazole éventuellement substitués, R₂ représente un groupe alkyle en C₁-C₈, R₃ représente un groupe alkyle en C₁-C₈ éventuellement substitué et R₄ un atome d'hydrogène ou un groupe alkyle en C₁-C₄, et 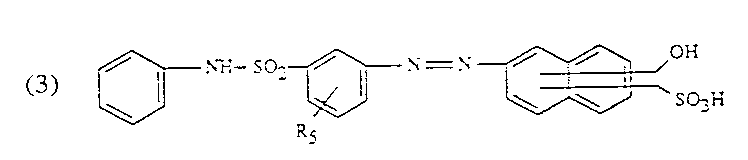 dans laquelle R₅ représente un groupe alkyle en C₁-C₄.

2. Procédé conforme à la revendication 1, caractérisé en ce que l'on mélange un colorant de formule (2), dans laquelle D représente un groupe phényle, thiophényle ou benzothiazole, chacun des résidus cités pouvant être substitués par un atome d'halogène, un groupe alkyle en C₁-C₄, un groupe alcoxy en C₁-C₄, un groupe (alcoxy en C₁-C₄)-carbonyle un groupe sulfo ou un groupe alkylaminosulfonyle en C₁-C₄ pouvant être substituer dans la partie alkyle par une fonction sulfo, R₂ représente un groupe alkyle en C₁-C₄, R₃ un groupe benzyle ou un groupe alkyle en C₁-C₄, éventuellement substitué par un groupe sulfo ou sulfato et R₄ représente un atome-d'hydrogène ou un groupe alkyle en C₁-C₄.

3. Procédé conforme à une des revendications 1 ou 2, caractérisé en ce que l'on utilise un colorant de formule 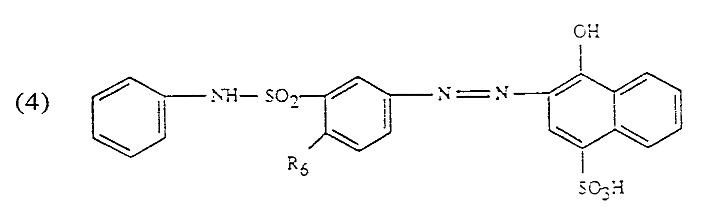 dans laquelle R₆ représente un groupe alkyle en C₁-C₄, en particulier un groupe méthyle.

4. Procédé conforme à la revendication 1, caractérisé en ce que l'on utilise un colorant de formule (1) dans laquelle R₁ représente un groupe méthyle ou éthyle, en particulier un groupe méthyle, et au moins un colorant de formule (2), dans laquelle D représente un groupe phényle substitué par un atome de chlore un groupe sulfo, méthylaminosulfonyle, éthylaminosulfonyle, ou β-sulfoéthylaminosulfonyle, un groupe thiophényle substitué par un groupe méthyle, méthoxy ou éthoxycarbonyle ou un groupe benzothiophényle éventuellement substitué par un groupe méthyle, méthoxy ou sulfo, R₂ représente un groupe éthyle, R₃ un groupe éthyle, β-sulfatoéthyle, - (CH₂)₂₋₃-SO₃H ou benzyle et R₄ représente un atome d'hydrogène ou un groupe méthyle, ou un colorant de formule 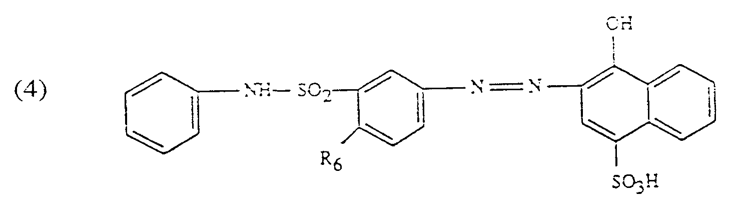 dans laquelle R₆ représente un groupe méthyle

5. Procédé conforme à la revendication 4, caractérisé en ce que l'on utilise comme colorant de formule (2) au moins un colorant de formule (5) à (10):

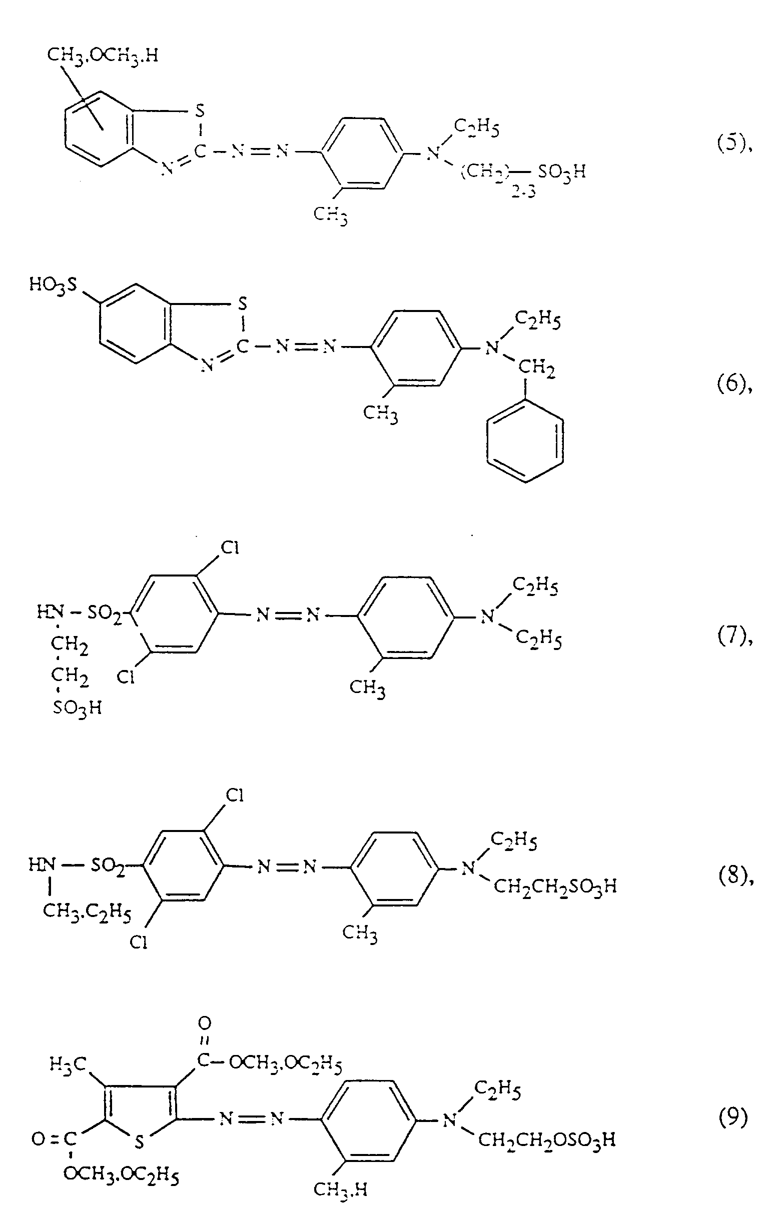

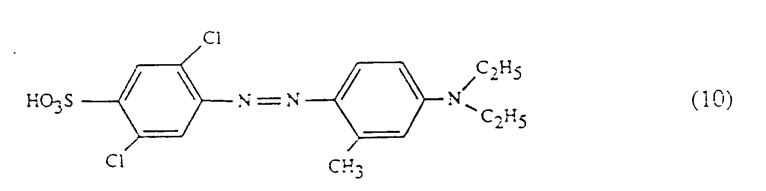

6. Procédé conforme à une des revendications 1 à 5, caractérisé en ce que le rapport du colorant de formule (1) aux colorants de formule (2) ou (3) est compris entre 10:90 et 90:10, en particulier entre 40:60 et 60:40, et de préférence entre 45:55 et 55:45.

7. Procédé pour la teinture et l'impression de matériaux en polyamide naturel ou synthétique avec un mélange de colorants, caractérisé en ce que l'on utilise un mélange de colorants conforme à une des revendications 1 à 6.

8. Procédé pour la teinture et l'impression de matériaux en polyamide naturel ou synthétique utilisant un mélange de colorants conforme à une des revendications 1 à 6 en combinaison avec d'autres colorants.

9. Procédé conforme à la revendication 8, pour la teinture ou l'impression en trichromie, caractérisé en ce que l'on utilise un mélange de colorants conforme à une des revendications 1 à 6 en combinaison avec au moins un colorant jaune ou orange et au moins un colorant bleu.

10. Utilisation du mélange de colorants obtenu conformément à la revendication 1 pour la teinture et l'impression de matériaux en polyamide synthétique et naturel.
